# EUROPÄISCHE PATENTSCHRIFT

(11) **EP 2 802 965 B1**
(45) Veröffentlichungstag und Bekanntmachung des Hinweises auf die Patenterteilung: **08.07.2015**
(21) Anmeldenummer: 12810096.3
(22) Anmeldetag: 19.12.2012
(51) Int. Cl.: G06F 3/01, G06F 3/041, G06F 3/0354

(54) **EINGABEVORRICHTUNG MIT EINER BERÜHRUNGSSENSITIVEN EINGABEFLÄCHE**
INPUT DEVICE COMPRISING A TOUCH-SENSITIVE INPUT SURFACE
DISPOSITIF DE SAISIE COMPORTANT UNE SURFACE DE SAISIE TACTILE

(30) Priorität: 13.01.2012 DE 102012000586
(43) Veröffentlichungstag der Anmeldung: 19.11.2014
(73) Patentinhaber: Audi AG, 85045 Ingolstadt (DE)
(72) Erfinder: SCHNEIDER, Johann, 85139 Wettstetten (DE); KÜHNE, Marcus, 85051 Ingolstadt (DE); MÜLLER, Ulrich, 85055 Ingolstadt (DE)
(74) Vertreter: Brandt, Kai
(86) Internationale Anmeldenummer: PCT/EP2012/005242
(87) Internationale Veröffentlichungsnummer: WO 2013/104400

(56) Entgegenhaltungen:
- WO-A1-2010/046494
- WO-A1-2010/055234
- US-A1- 2007 057 927
- US-A1- 2011 141 052

## Beschreibung

Die Erfindung betrifft eine Eingabevorrichtung mit einer berührungssensitiven Eingabefläche mit den Merkmalen des Oberbegriffs des Anspruchs 1.

Eingabevorrichtungen mit berührungssensitiven Eingabeflächen werden in zunehmendem Maße bei elektronischen Geräten verwendet. Beispiele dafür sind tragbare Medienwiedergabegeräte, Mobiltelefone usw. Daneben werden derartige Eingabevorrichtungen mit einer berührungssensitiven Eingabefläche auch als Benutzerschnittstelle in Kraftfahrzeugen eingesetzt. Über die berührungssensitive Eingabefläche kann der Benutzer Bedieneingaben vornehmen, beispielsweise kann er aus einem Menü mit mehreren Auswahlmöglichkeiten einen Menüpunkt auswählen und dadurch eine bestimmte Aktion auslösen. Der Eingabevorgang erfolgt dabei im einfachsten Fall, indem der Benutzer die Eingabefläche mit dem Finger antippt, zusätzlich kann er mit dem Finger eine gleitende Bewegung auf der Eingabefläche vornehmen, um eine bestimmte Aktion auszulösen. Der Benutzer führt somit ein bestimmtes Bewegungsmuster aus, wobei einem Bewegungsmuster eine spezielle Bedeutung oder Funktion zugeordnet ist.

Herkömmliche berührungssensitive Eingabeflächen weisen Sensoren auf, beispielsweise kapazitive Sensoren, die in der Lage sind, die Position eines die Eingabefläche berührenden Objekts zu erfassen. Der Sensor bzw. die Sensoren können dabei matrixartig ausgebildet sein, so dass als Sensordaten die Koordinaten der momentanen Position des Objekts erhalten werden können. Das Objekt ist z. B. ein die Eingabefläche berührender Finger eines Benutzers. Diese Sensordaten können entweder direkt in der Eingabevorrichtung oder in einer daran angeschlossenen Auswerteeinrichtung verarbeitet werden, dazu weist die Eingabevorrichtung eine Schnittstelle auf, über die sie mit einem anderen Gerät verbunden ist.

Eine gattungsgemäße Eingabevorrichtung ist aus der US 2011/0141052 A1 bekannt. Die Eingabevorrichtung umfasst eine berührungssensitive Eingabefläche, zur Erfassung einer Benutzereingabe sind Kraftsensoren vorgesehen, die ein entsprechendes Signal bei einer Betätigung erzeugen. Die Eingabevorrichtung ist in der Lage, eine haptisch erfassbare Rückmeldung für den Benutzer zu erzeugen.

Aus der US 2007/0057927 A1 ist eine Eingabevorrichtung bekannt, insbesondere für ein Fahrzeug, mit einer berührungssensitiven Eingabefläche und mit einem Aktuator, der die berührungssensitive Eingabefläche, die als Touchscreen ausgebildet ist, entlang einer Achse hin und her verschieben kann.

Aus der WO 2010/055234 A1 ist eine Eingabevorrichtung mit haptisch erfassbarer Rückmeldung und einem entsprechenden Aktuator bekannt.

In ähnlicher Weise beschreibt auch die WO 2010/046494 A1 eine Eingabevorrichtung mit haptischer Rückmeldung. Bei einer Benutzereingabe wird mittels eines Aktuator, der einen Elektromagneten umfasst, die Eingabefläche bewegt.

Aus der DE 10 2008 008 921 A1 ist eine berührungssensitive Eingabefläche bekannt, bei der neben der Erfassung der Position des die Eingabefläche berührenden Objekts auch das Auslösen eines Schaltkontakts vorgesehen sein kann. Dazu ist unterhalb der berührungssensitiven Eingabefläche ein Schalter angeordnet, so dass ein Schaltvorgang ausgelöst wird, wenn der Benutzer eine genügend starke senkrechte Kraft auf die Eingabefläche ausübt, die dadurch eine Kippbewegung durchführt. Die Eingabefläche kann ein Mittel zum Erzeugen einer haptisch erfassbaren Rückmeldung aufweisen, die als Vibration oder durch "Klicken" erfolgen kann. Durch diese haptisch erfassbare Rückmeldung wird dem Benutzer vermittelt, dass ein Eingabevorgang stattgefunden hat.

Untersuchungen haben allerdings ergeben, dass Eingabevorrichtungen, bei denen die Eingabefläche gekippt wird, nicht optimal sind, da dem Benutzer das Gefühl einer wackeligen Vorrichtung vermittelt wird.

Der Erfindung liegt daher die Aufgabe zugrunde, eine Eingabevorrichtung mit einer berührungssensitiven Eingabefläche anzugeben, die steif und robust aufgebaut ist.

Zur Lösung dieser Aufgabe ist bei einer Eingabevorrichtung der eingangs genannten Art erfindungsgemäß vorgesehen, dass die Eingabefläche auf einem Schlitten bewegbar angeordnet ist, der zumindest geringfügig um eine zur Bewegungsachse der Eingabefläche senkrechte Drehachse drehbar ist und dass der wenigstens eine Druck- oder Kraftsensor an dem Schlitten angeordnet ist.

Bei der erfindungsgemäßen Eingabevorrichtung ist die berührungssensitive Eingabefläche horizontal verschiebbar gelagert, durch das Verschieben der Eingabefläche wird eine haptisch erfassbare Rückmeldung erzeugt, ohne dass die Eingabefläche kippt oder in irgendeiner Weise wackelig wirkt. Da die Eingabefläche der erfindungsgemäßen Eingabevorrichtung steif und robust ausgebildet ist, wird dem Benutzer das Gefühl einer besonders hochwertigen Eingabefläche vermittelt. Die haptisch erfassbare Rückmeldung kann erzeugt werden, wenn der Benutzer die Eingabefläche betätigt, d. h. wenn er mit dem Finger auf die Eingabefläche drückt. Beim Erreichen eines Schwellwerts für die Kraft oder den Druck wird die haptisch erfassbare Rückmeldung erzeugt. Ebenso kann nach dem Loslassen der Eingabefläche eine haptisch erfassbare Rückmeldung erzeugt werden. Die Bewegung der bewegbar gelagerten Eingabefläche entlang der Achse wird als haptischer Klick wahrgenommen, dementsprechend erhält der Benutzer beim Betätigen (Drücken) und/oder beim Loslassen der Eingabefläche ein haptisches Feedback wie bei einem herkömmlichen Taster.

Bei der erfindungsgemäßen Eingabevorrichtung ist es vorgesehen, dass die Eingabefläche auf einem Schlitten bewegbar angeordnet ist, der zumindest geringfügig um eine zur Bewegungsachse der Eingabefläche senkrechte Achse drehbar ist. Mittels des Schlittens wird eine Bewegung um eine zur Bewegungsachse der Eingabefläche senkrechte Achse ermöglicht, dadurch kann eine senkrecht auf die Eingabefläche einwirkende Kraft oder ein entsprechender Druck erfasst werden. Die Erfassung der Kraft bietet die Möglichkeit, nach dem Überschreiten des Schwellwerts für die Kraft oder den Druck eine Aktion auszulösen, z. B. einen Auswahlvorgang in einem Bedienmenü. Obwohl der Schlitten grundsätzlich eine Drehbewegung um einen festen Drehpunkt vollführen kann, ist der in der Praxis zurückgelegte Weg bei der Betätigung klein. Der Schlitten ist hebelförmig ausgebildet und an einem Endpunkt des Hebels gelagert, wodurch die vorgesehene Drehbewegung ermöglicht wird. Um eine Bedieneingabe des Benutzers besser erfassen zu können, ist es vorgesehen, dass an dem Schlitten wenigstens ein Druck- oder Kraftsensor zum Erfassen einer senkrecht auf die Eingabefläche einwirkenden Kraft oder eines Drucks angeordnet ist. Alternativ kann es vorgesehen sein, dass an dem Schlitten zwei oder mehr Druck- oder Kraftsensoren angeordnet sind, die zueinander beabstandet sind. Da die Position des Objekts (Fingers) auf der berührungssensitiven Eingabefläche erfasst werden kann, kann anhand der mittels des Druck- oder Kraftsensors erfassten Information über das Hebelgesetz die am Berührpunkt vom Benutzer aufgewendete Kraft berechnet werden. Dementsprechend kann für jeden Berührpunkt auf der berührungssensitiven Eingabefläche die tatsächliche Kontaktkraft berechnet werden.

Gemäß einer Weiterbildung der Erfindung kann es vorgesehen sein, dass der Druck- oder Kraftsensor, der im Bereich des Schlittens angeordnet ist, als wegloser Sensor ausgebildet ist. Da die Drehbewegung des Schlittens im Vergleich zu seiner Ausdehnung gering ist, kann ein wegloser Sensor benutzt werden, um den Druck oder die Kraft zu messen. Vorzugsweise kann der weglose Sensor als Dehnmessstreifen ausgebildet sein, derartige Sensoren weisen den Vorteil auf, dass sie praktisch verschleißfrei sind.

Um eine möglichst genaue Erfassung der Kraft oder des Drucks zu ermöglichen, kann die Eingabefläche an oder auf dem Schlitten zwischen dem

Drehpunkt und dem Druck- oder Kraftsensor angeordnet sein. Der vorzugsweise als Hebel ausgebildete Schlitten ist somit an seinem Drehpunkt gelagert, auf dem Hebel bzw. dem Schlitten befindet sich die entlang einer Achse bewegbare Eingabefläche, am anderen (freien) Ende des Hebels (Schlittens) ist der Druck- oder Kraftsensor angeordnet. Auf diese Weise kann die Kraft bzw. der Druck mit besonders hoher Genauigkeit erfasst werden.

Das Mittel zum Erzeugen der haptisch erfassbaren Rückmeldung ist als elektromechanischer Aktuator ausgebildet. Der Aktuator kann beispielsweise einen Elektromotor, einen Hubmagnet oder eine Magnetspule (Solenoidspule) umfassen, jedes dieser Bauteile ist in der Lage, die berührungssensitive Eingabefläche entlang ihrer Bewegungsachse hin und her zu bewegen, wodurch die haptisch erfassbare Rückmeldung entsteht.

Um die Handhabung der erfindungsgemäßen Eingabevorrichtung weiter zu verbessern, kann es vorgesehen sein, dass die Eingabefläche seitlich punktoder linienförmig geführt oder gelagert ist. Diese Lagerung verhindert somit ein Verkippen der Eingabefläche senkrecht zu seiner Bewegungsrichtung. Vorzugsweise kann die Eingabefläche an ihren gegenüberliegenden Seiten gelagert sein. Diese Lagerung schränkt Bewegungsfreiheitsgrade ein, die Eingabefläche kann somit lediglich mittels des Aktuators einachsig entlang ihrer Bewegungsrichtung bewegt werden, zusätzlich kann der Benutzer durch eine auf die Eingabefläche einwirkende Druckkraft eine geringe Drehbewegung auslösen, die mittels des Druck- oder Kraftsensors erfasst werden kann.

Daneben betrifft die Erfindung ein Kraftfahrzeug. Das erfindungsgemäße Kraftfahrzeug umfasst eine Eingabevorrichtung der beschriebenen Art.

Vorzugsweise ist die Eingabevorrichtung in dem erfindungsgemäßen Kraftfahrzeug derart montiert, dass die Eingabefläche eine laterale Bewegung durchführen kann, d. h. die Eingabefläche wird vom Fahrersitz aus gesehen von links nach rechts und wieder zurück bewegt.

Weitere Vorteile und Einzelheiten der Erfindung werden anhand eines Ausführungsbeispiels unter Bezugnahme auf die Zeichnungen erläutert. Die Zeichnungen sind schematische Darstellungen und zeigen:
- Fig. 1: ein Ausführungsbeispiel einer erfindungsgemäßen Eingabevorrichtung in einer Seitenansicht;
- Fig. 2: eine Draufsicht auf die Eingabevorrichtung von Fig. 1; und
- Fig. 3: eine weitere Draufsicht der Eingabevorrichtung von Fig. 1.

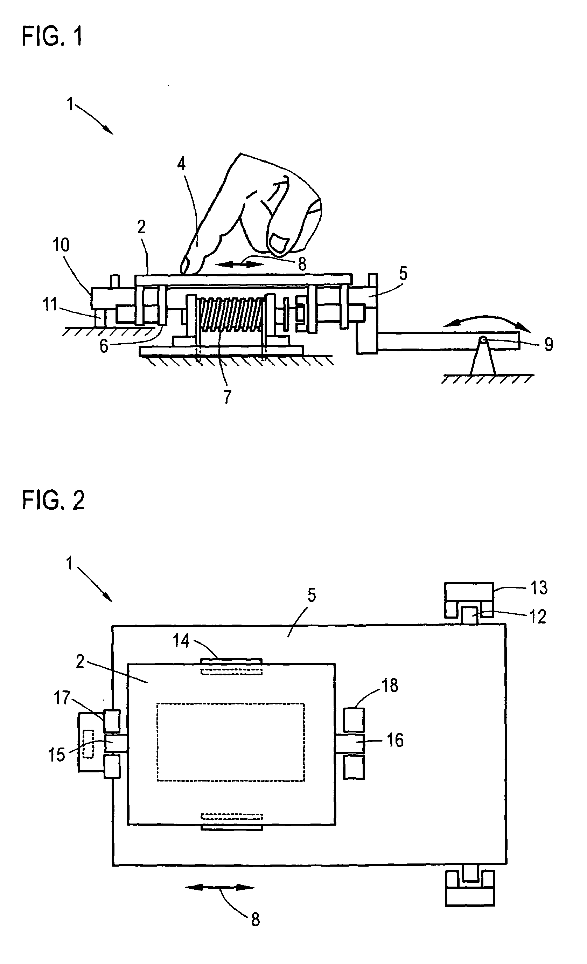

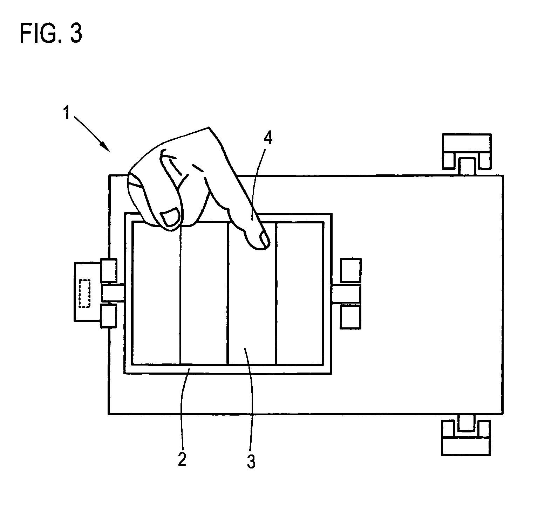

Die in Fig. 1 in einer Seitenansicht gezeigte Eingabevorrichtung 1 umfasst eine berührungssensitive Eingabefläche 2. Fig. 3 ist eine Draufsicht der Eingabevorrichtung 1 von Fig. 1, in der man erkennt, dass die Eingabefläche 2 mehrere flächige kapazitive Sensoren 3 aufweist, die es ermöglichen, die Position des Berührpunkts eines Objekts 4 auf der Eingabefläche 2 präzise zu erfassen. Derartige Sensoren 3 sind an sich bekannt, sie weisen eine x-y-Matrix auf, so dass die Position des Berührpunkts in Form von Koordinaten erfasst und über eine Schnittstelle zur Auswertung übertragen werden kann.

In dem dargestellten Ausführungsbeispiel ist die Eingabefläche 2 rechteckig ausgebildet und auf einem Schlitten 5 angeordnet. Unterhalb der Eingabefläche 2 sind Befestigungselemente 6 vorgesehen, die Eingabefläche 2 ist allerdings nicht fest mit dem Schlitten 5 verbunden sondern entlang einer Achse auf dem Schlitten 5 bewegbar. Unterhalb des Schlittens 5 befindet sich ein elektromagnetischer Aktuator 7, der in der Lage ist, die oberhalb des Schlittens 5 angebrachte Eingabefläche 2 in Richtung des Doppelpfeils 8 zu bewegen. Wenn der Aktuator 7 betätigt wird, führt die Eingabefläche 2 eine gesteuerte hin und her gehende Bewegung aus, die vom Benutzer als haptisch erfassbare Rückmeldung wahrgenommen wird. Auf diese Weise kann dem Benutzer ein Feedback gegeben werden, wenn er die Oberfläche der Eingabefläche 2 berührt, wobei die Berührung optional mit einer bestimmten Mindestkraft erfolgen muss. Alternativ oder zusätzlich kann dem Benutzer die haptisch erfassbare Rückmeldung auch dann vermittelt werden, wenn er die Eingabefläche 2 wieder loslässt.

In Fig. 1 erkennt man, dass der Schlitten 5 als Hebel ausgebildet ist, ein Ende des Schlittens 5 ist um eine Drehachse 9 drehbar. Bei der Benutzung der Eingabevorrichtung 1 ist die Drehung allerdings auf einen sehr kleinen Winkelbereich beschränkt. Im Ruhezustand liegt der Schlitten 5 mit seinem dem Drehpunkt 9 gegenüberliegenden Ende 10 auf einem Drucksensor 11 auf. In dem dargestellten Ausführungsbeispiel ist der Drucksensor 11 als Dehnmessstreifen ausgebildet, darüber hinaus kann der Drucksensor 11 bei anderen Ausführungsbeispielen auch als Kraftmessdose oder dergleichen ausgebildet sein. Wesentlich ist dabei, dass der Druck- oder Kraftsensor ein Sensorsignal liefert, das ein Maß für den Druck oder die Kraft ist, der bzw. die von einem Benutzer beim Berühren der Eingabefläche 2 erzeugt wird. Die Verwendung eines weglosen Sensors, insbesondere eines Dehnmessstreifens, als Drucksensor 11 weist den Vorteil auf, dass der weglose Sensor praktisch verschleißfrei ist und auch eine geringe Drehung des Schlittens 5, die zu einer Kraft- bzw. Druckänderung führt, erfassen kann. Da der Drucksensor 11 an dem freien Ende des Schlittens 5 angebracht ist, kann die durch das Objekt 4 (Finger des Benutzers) aufgebrachte Kraft besonders genau erfasst werden.

Wenn sich das Objekt 4 an unterschiedlichen Stellen auf der Eingabefläche 2 befindet, werden - bedingt durch unterschiedliche Abstände zwischen dem Objekt 4 und dem Drucksensor 11 - verschiedene Druck- oder Kraftwerte erfasst, es ist daher erforderlich, den von dem Drucksensor 11 erfassten Wert mittels des Hebelgesetzes umzurechnen. Da über die Eingabefläche 2 gleichzeitig die Position des Objekts 4 auf der Eingabefläche 2 erfasst wird, ist die Hebellänge bzw. der Abstand zwischen dem Objekt 4 und dem Drucksensor 11 senkrecht zur Kraftrichtung bekannt. Somit kann der von dem Drucksensor 11 erfasste Druck- oder Kraftwert umgerechnet werden. Nach der Umrechnung sind die tatsächlichen Werte für die Kraft oder den Druck vergleichbar, daher kann ein bestimmter Schwellwert für die Kraft oder den Druck festgelegt werden. Beim Überschreiten des Schwellwerts wird eine Aktion ausgelöst, beispielsweise gilt eine Benutzereingabe als vorgenommen, wenn die vom Benutzer aufgewendete Kraft oder der Druck einen bestimmten Schwellwert überschreitet. In ähnlicher Weise kann eine Aktion ausgelöst werden, wenn der Druck oder die Kraft einen Schwellwert unterschreitet, beispielsweise kann beim Unterschreiten eines festgelegten Schwellwerts mittels des Aktuators 7 eine haptisch erfassbare Rückmeldung erzeugt werden.

In Fig. 2 erkennt man, dass der Schlitten 5 im Bereich der Drehachse 9 vorstehende Zapfen 12 aufweist, die in einer Aufnahme 13 drehbar aufgenommen sind. Die beiden gegenüberliegenden Zapfen 12 und die jeweiligen Aufnahmen 13 bilden zusammen ein Drehlager, das eine Drehung des Schlittens 5 um die Drehachse 9 ermöglicht.

In Fig. 2 ist ferner ersichtlich, dass die Eingabefläche 2 an seitlichen Lagerpunkten 14 gestützt ist, um ein Verkippen der Eingabefläche 2 bei einer Berührung durch den Benutzer zu verhindern.

Die Eingabefläche 2 weist an gegenüberliegenden Enden Lagerelemente 15, 16 auf, die als vorspringende Zapfen ausgebildet sind und mit gegengleich ausgebildeten Lagerelementen 17, 18 des Schlittens 5 zusammenwirken. Die Eingabefläche 2 ist somit entlang der durch den Doppelpfeil 8 angegebenen Achse bezüglich des Schlittens 5 axial bewegbar.

Die anhand der Fig. 1 - 3 erläuterte Eingabevorrichtung 1 ist Bestandteil eines Kraftfahrzeugs und derart angeordnet, dass die Eingabefläche 2 eine laterale Bewegung durchführen kann.

## Patentansprüche

1. Eingabevorrichtung (1) mit einer berührungssensitiven Eingabefläche (2), mit mehreren kapazitiven Sensoren (3) zum Erfassen der Position eines die Eingabefläche (2) berührenden Objekts (4), einer Schnittstelle zum Übertragen von Sensordaten und einem Mittel zum Erzeugen einer haptisch erfassbaren Rückmeldung, wobei das Mittel einen elektromechanischen Aktuator (7) aufweist, der zum Bewegen der entlang einer Achse (8) bewegbar gelagerten Eingabefläche (2) ausgebildet ist, wobei die Eingabevorrichtung (1) wenigstens einen Druck- oder Kraftsensor (11) zum Erfassen einer senkrecht auf die Eingabefläche (2) einwirkenden Kraft oder eines Drucks aufweist, und wobei die haptisch erfassbare Rückmeldung erzeugt wird, wenn das Objekt (4) die Oberfläche der Eingabefläche (2) berührt und die Berührung einen bestimmten Schwellwert für die Kraft oder den Druck, gemessen durch den Druck- oder Kraftsensor (11), über- oder unterschreitet,
**dadurch gekennzeichnet,**
**dass** die Eingabefläche (2) auf einem Schlitten (5) bewegbar angeordnet ist, der zumindest geringfügig um eine zur Bewegungsachse (8) der Eingabefläche (2) senkrechte Drehachse (9) drehbar ist und dass der wenigstens eine Druck- oder Kraftsensor (11) an dem Schlitten (5) angeordnet ist.

2. Eingabevorrichtung nach Anspruch 1,
**dadurch gekennzeichnet,**
**dass** der Schlitten (5) um eine außerhalb der Eingabefläche (2) liegende Drehachse (9) schwenkbar ist.

3. Eingabevorrichtung nach Anspruch 1 oder 2,
**dadurch gekennzeichnet,**
**dass** der Druck- oder Kraftsensor (11) als wegloser Sensor, insbesondere als Dehnmessstreifen, ausgebildet ist.

4. Eingabevorrichtung nach einem der vorangehenden Ansprüche,
**dadurch gekennzeichnet,**
**dass** die Eingabefläche (2) an oder auf dem Schlitten (5) zwischen der Drehachse (9) und dem Druck- oder Kraftsensor (11) angeordnet ist.

5. Eingabevorrichtung nach einem der vorangehenden Ansprüche,
**dadurch gekennzeichnet,**
**dass** die Eingabefläche (2) seitlich, vorzugsweise an gegenüberliegenden Seiten, punkt- oder linienförmig auf oder an dem Schlitten (5) geführt oder gelagert ist.

6. Kraftfahrzeug,
**dadurch gekennzeichnet,**
**dass** es eine Eingabevorrichtung nach einem der Ansprüche 1 bis 5 umfasst.

7. Kraftfahrzeug nach Anspruch 6,
**dadurch gekennzeichnet,**
**dass** die Eingabevorrichtung derart montiert ist, dass die Eingabefläche eine laterale Bewegung durchführen kann.

## Claims

1. Input device (1) having a touch-sensitive input surface (2), comprising a plurality of capacitive sensors (3) for detecting the position of an object (4) touching the input surface (2), an interface for transferring sensor data and a means for producing haptically detectable feedback, the means comprising an electromechanical actuator (7) which is designed to move the input surface (2) which is mounted so as to be movable along an axis (8), the input device (1) having at least one pressure or force sensor (11) for detecting a force or a pressure acting on the input surface (2) in a vertical manner, and the haptically detectable feedback being produced when the object (4) touches the top surface of the input surface (2) and the contact exceeds or falls below a specific threshold value for the force or the pressure, which is measured by the pressure or force sensor (11),
**characterised in that**
the input surface (2) is movably arranged on a carriage (5) which is rotatable at least slightly about a hinge pin (9), which is perpendicular to the movement axis (8) of the input surface (2), and **in that** the at least one pressure or force sensor (11) is arranged on the carriage (5).

2. Input device according to claim 1, **characterised in that** the carriage (5) is pivotable about a hinge pin (9) which lies outside the input surface (2).

3. Input device according to either claim 1 or claim 2, **characterised in that** the pressure or force sensor (11) is formed as a displacement-free sensor, in particular as a strain gauge.

4. Input device according to any of the preceding claims, **characterised in that** the input surface (2) is disposed on or on top of the carriage (5) between the hinge pin (9) and the pressure or force sensor (11).

5. Input device according to any of the preceding claims, **characterised in that** the input surface (2) is guided or mounted laterally, preferably on opposite sides, on top of or on the carriage (5) in the form of points or lines.

6. Motor vehicle, **characterised in that** it comprises an input device according to any of claims 1 to 5.

7. Motor vehicle according to claim 6, **characterised in that** the input device is mounted such that the input surface can carry out a lateral movement.

## Revendications

1. Dispositif de saisie (1) comprenant une face de saisie tactile (2), plusieurs capteurs capacitifs (3) pour capter la position d'un objet (4) venant en contact avec la face de saisie (2), une interface pour transmettre des données de capteurs et un moyen pour produire un accusé de réception à saisie haptique, dans lequel le moyen présente un actionneur électromécanique (7), qui est conçu pour déplacer la face de saisie (2) montée mobile le long d'un axe (8), dans lequel le dispositif de saisie (1) présente au moins un capteur de pression ou de force (11) pour capter une force opérant perpendiculairement à la face de saisie (2) ou une pression et dans lequel l'accusé de réception à saisie haptique est produit si l'objet (4) vient en contact avec la surface de la face de saisie (2) et que le contact vient au-dessus ou en dessous d'une certaine valeur de seuil pour la force ou la pression, mesurée par le capteur de pression ou de force (11),
**caractérisé en ce que** :
la face de saisie (2) est aménagée mobile sur un chariot (5) qui peut tourner au moins faiblement autour d'un axe de rotation (9) perpendiculairement à l'axe de déplacement (8) de la face de saisie (2) et le au moins un capteur de pression ou de force (11) est aménagé sur le chariot (5).

2. Dispositif de saisie selon la revendication 1,
**caractérisé en ce que** :
le chariot (5) peut pivoter autour d'un axe de rotation (9) situé à l'extérieur de la face de saisie (2).

3. Dispositif de saisie selon la revendication 1 ou la revendication 2,
**caractérisé en ce que** :
le capteur de pression ou de force (11) se présente sous la forme d'un capteur stationnaire, en particulier d'une jauge de contrainte.

4. Dispositif de saisie selon l'une quelconque des revendications précédentes,
**caractérisé en ce que** :
la face de saisie (2) est aménagée dans ou sur le chariot (5) entre l'axe de rotation (9) et le capteur de pression ou de force (11).

5. Dispositif de saisie selon l'une quelconque des revendications précédentes,
**caractérisé en ce que** :
la face de saisie (2) est guidée ou montée latéralement, de préférence sur les côtés opposés, en forme ponctuelle ou linéaire sur ou dans le chariot (5).

6. Véhicule à moteur,
**caractérisé en ce que** :
il comprend un dispositif de saisie selon l'une quelconque des revendications 1 à 5.

7. Véhicule à moteur selon la revendication 6,
**caractérisé en ce que** :
le dispositif de saisie est monté de sorte que la face de saisie puisse effectuer un déplacement latéral.
